(19)

**Europäisches Patentamt**
**European Patent Office**
**Office européen des brevets**

(11)  **EP 4 528 668 B1**

(12) **EUROPEAN PATENT SPECIFICATION**

(45) Date of publication and mention
of the grant of the patent:
**05.08.2026  Bulletin 2026/32**

(21) Application number: **23198993.0**

(22) Date of filing: **22.09.2023**

(51) International Patent Classification (IPC):
*G06V 10/772* (2022.01)    *G06V 10/774* (2022.01)
*G06V 10/82* (2022.01)    *G06N 3/0464* (2023.01)
*G06N 3/082* (2023.01)    *G06N 3/045* (2023.01)

(52) Cooperative Patent Classification (CPC):
**G06V 10/82; G06N 3/045; G06N 3/0464;**
**G06N 3/082; G06V 10/772; G06V 10/774;**
G06V 2201/06; Y02P 90/30

(54) **METHOD, APPARATUS, DEVICE, AND MEDIUM FOR DETECTING WORKPIECE**

VERFAHREN, VORRICHTUNG, VORRICHTUNG UND MEDIUM ZUR DETEKTION EINES WERKSTÜCKS

PROCÉDÉ, APPAREIL, DISPOSITIF ET SUPPORT DE DÉTECTION DE PIÈCE À USINER

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(43) Date of publication of application:
**26.03.2025  Bulletin 2025/13**

(73) Proprietor: **Siemens Aktiengesellschaft**
**80333 München (DE)**

(72) Inventors:
• **Yao, Wei**
**Chaoyang, 100025 (CN)**
• **Li, Dong**
**Beijing, 100025 (CN)**
• **Zhang, Chuan Yu**
**Beijing, 100028 (CN)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
• CAO HU ET AL: "Efficient Grasp Detection Network With Gaussian-Based Grasp Representation for Robotic Manipulation", IEEE/ASME TRANSACTIONS ON MECHATRONICS, IEEE SERVICE CENTER, PISCATAWAY, NJ, US, vol. 28, no. 3, June 2023 (2023-06-01), pages 1384 - 1394, XP011943105, ISSN: 1083-4435, [retrieved on 20221216], DOI: 10.1109/TMECH.2022.3224314
• DING XIAOHAN ET AL: "RepVGG: Making VGG-style ConvNets Great Again", 2021 IEEE/CVF CONFERENCE ON COMPUTER VISION AND PATTERN RECOGNITION (CVPR), IEEE, 20 June 2021 (2021-06-20), pages 13728 - 13737, XP034009023, DOI: 10.1109/CVPR46437.2021.01352
• CHEN WEI ET AL: "FS-Net: Fast Shape-based Network for Category-Level 6D Object Pose Estimation with Decoupled Rotation Mechanism", 2021 IEEE/CVF CONFERENCE ON COMPUTER VISION AND PATTERN RECOGNITION (CVPR), IEEE, 20 June 2021 (2021-06-20), pages 1581 - 1590, XP034008785, DOI: 10.1109/CVPR46437.2021.00163

EP 4 528 668 B1

**Description**

FIELD

The present invention relates to the technical field of artificial intelligence (AI) technology, in particular to a method, apparatus, device, and medium for detecting workpiece.

BACKGROUND

With the improvement of industrial automation, intelligent industrial robots are gradually replacing manual sorting tasks in various industrial scenarios, which not only improves work efficiency but also effectively saves production costs. To achieve intelligent sorting, robots need to use machine vision technology to automatically identify and locate the sorted mixture. With significant breakthroughs in feature extraction in deep learning technology, object detection technology based on deep learning can automatically extract comprehensive image features. However, in order to achieve high detection accuracy, deep learning-based object detection networks usually have deep network structures designed, which leads to a significant increase in their spatial and temporal costs.

In general, performing AI based workpiece detection processing on image processors (GPUs) takes a long time and affects speed of entire process, making it difficult to implement on industrial edge (IE) devices.

CAO HU et al., "Efficient Grasp Detection Network With Gaussian-Based Grasp Representation for Robotic Manipulation", IEEE/ASME Trans. Mechatronics, vol. 28, no. 3, June 2023, pages 1384-1394, relates to robotic grasp detection, in which a deep learning model is trained to detect grasp positions on objects using RGB or depth images. The deep learning model is a lightweight generative network architecture for grasp detection in one stage. Online data augmentation is conducted to train the network on small datasets. Specifically, random crops, zooms, and rotations are used to improve the diversity of these datasets.

DING XIAOHAN et al., "RepVGG: Making VGG-style ConvNets Great Again", 2021 IEEE/ CVF CONFERENCE ON COMPUTER VISION AND PATTERN RECOGNITION (CVPR), 20 June 2021, pages 13728-13737, relates to convolutional neural network architecture re-parametrisation.

CHEN WEI et al., "FS-Net: Fast Shape-based Network for Category-Level 6D Object Pose Estimation with Decoupled Rotation Mechanism", 2021 IEEE/CVF CONFERENCE ON COMPUTER VISION AND PATTERN RECOGNITION (CVPR), 20 June 2021, pages 1581-1590, relates to object pose estimation from RGB-D data.

SUMMARY

Embodiments of the present invention propose a method, apparatus, device, and medium for detecting workpiece.

In a first aspect, a method for detecting workpiece is provided. The method comprising:

performing data augmentation on an original image of an original workpiece;
performing training on a neural network model comprising multiple feature extraction branches to obtain a workpiece detection model based on a workpiece image group obtained through the data augmentation;
converting the workpiece detection model into a lightweight workpiece detection model; and
performing detection on workpieces with the same shape and at least one different dimension as the original workpiece based on the lightweight workpiece detection model.

Therefore, new workpieces of different dimensions can be detected quickly based on model trained on data augmentation. Multiple feature extraction branches can improve detection performance. Moreover, lightweight workpiece detection model facilitates deployment work and reduces resource pressure on deployment side, especially suitable for edge devices.

Preferably, wherein performing data augmentation on an original image of an original workpiece comprises:

generating a new workpiece image in the workpiece image group based on the original image, a workpiece in the new workpiece image has the same shape as the original workpiece;
wherein the length of workpiece in the new workpiece image is the same as that of the original workpiece, the width of workpiece in the new workpiece image is different from that of the original workpiece; or
wherein the width of workpiece in the new workpiece image is the same as that of the original workpiece, the length of workpiece in the new workpiece image is different from that of the original workpiece.

Therefore, embodiments of the present invention can identify new workpieces with the same shape but different lengths or widths, especially suitable for mixed sorting scenarios of workpieces.

Preferably, wherein generating a new workpiece image in the workpiece image group based on the original image comprises:

dividing the original workpiece in the original image into a first region with invariant features and a second region with variable features;

changing the length of the second region to generate a second region with changed length;

changing the width of the second region to generate a second region with changed width;

combining the first region and the second region with changed length to form the new workpiece image; or combining the first region and the second region with changed width to form the new workpiece image.

Therefore, by changing the length or width of the second region with variable features, many types of new workpiece images can be easily generated.

Preferably, comprising:

obtaining a meta transformer;

replacing a feature extraction layer of the meta transformer with multiple feature extraction branches, wherein the multiple feature extraction branches comprise at least one of the following: shortcut to adder; 1x1 convolutional kernel in parallel with pooling unit; 1x1 convolutional kernel in parallel with convolutional unit;

determining the replaced meta transformer as the neural network model.

Therefore, replacing the feature extraction layer with multiple feature extraction branches can improve detection performance.

Preferably, wherein converting the workpiece detection model into a lightweight workpiece detection model comprises:

converting a first batch normalization unit, a first adder connected to the first batch normalization unit, and a shortcut from model input to the first adder in the workpiece detection model into a new first batch normalization unit, based on an identical transformation method;

converting a pooling unit, a second adder connected to the pooling unit, a 1x1 convolutional kernel in parallel with the pooling unit, and a shortcut from the first adder to the second adder in the workpiece detection model into a new pooling unit, based on an identical transformation method;

converting a dropout unit, a third adder connected to the dropout unit, and a shortcut from the input of the dropout unit to the third adder in the workpiece detection model into a new dropout unit, based on an identical transformation method;

converting a second batch normalization unit, a fourth adder connected to the second batch normalization unit, and a shortcut from the input of the second batch normalization unit to the fourth adder in the workpiece detection model into a new second batch normalization unit, based on an identical transformation method;

converting a convolutional unit, a fifth adder, a 1x1 convolutional kernel in parallel with the convolutional unit, and a shortcut from the input of the convolutional unit to the fifth adder in the workpiece detection model into a new convolutional unit, based on an identical transformation method;

connecting the new first batch normalization unit, the new pooling unit, the new dropout unit, the new second batch normalization unit, and the new convolution unit in sequence to form a feature detection layer in the lightweight workpiece detection model.

Therefore, replacing the components in the feature extraction layer with lightweight components through identity transformation can improve detection speed and reduce storage requirements, especially suitable for edge devices.

Preferably, wherein performing training on a neural network model comprising:

training the neural network model based on a workpiece image in the workpiece image group comprising a local label of the first region and a local label of the second region, wherein the method comprises:

deploying the lightweight workpiece detection model in an edge device;

inputting a reference workpiece image comprising preset grasping point coordinates into the lightweight workpiece detection model to output center coordinates of the first region and center coordinates of the second region in the reference workpiece image;

storing associatively the center coordinates of the first region in the reference workpiece image, the center coordinates of the second region in the reference workpiece image, and the preset gripping point coordinates;

inputting an image of workpiece to be detected into the lightweight workpiece detection model to output center coordinates of the first region in the image of workpiece to be detected and center coordinates of the second region in the image of workpiece to be detected;

determining gripping point coordinates in the image of workpiece to be detected based on the center coordinates of the first region in the reference workpiece image, the center coordinates of the second region in the reference workpiece image, the preset gripping point coordinates, the center coordinates of the first region in the image of workpiece to be detected, and the center coordinates of the second region in the image of workpiece to be detected.

Therefore, it is convenient and flexible to quickly obtain gripping point coordinates of new workpieces, especially suitable for sorting scenarios of mixed workpieces with the same shape but different lengths or widths.

Preferably, wherein performing training on a neural network model comprising:

training the neural network model based on a workpiece image in the workpiece image group comprising a local label of the first region, a local label of the second region and a global label of the workpiece image, wherein the method comprises:

inputting an image comprising multiple workpieces with overlapping relationships into the lightweight workpiece detection model;

obtaining detection results for each of the multiple workpieces from the lightweight workpiece detection model, wherein each detection result for each workpiece comprises first region and second region of corresponding workpiece.

The workpiece detection model trained on global and local labels can accurately perform detection for multiple workpieces with overlapping relationships.

In a second aspect, an apparatus for detecting workpiece is provided. The apparatus comprising:

a data augmentation module, configured to perform data augmentation on an original image of an original workpiece;

a training module, configured to perform training on a neural network model comprising multiple feature extraction branches to obtain a workpiece detection model based on a workpiece image group obtained through the data augmentation;

a converting module, configured to convert the workpiece detection model into a lightweight workpiece detection model; and

a detecting module, configured to perform detection on workpieces with the same shape and at least one different dimension as the original workpiece based on the lightweight workpiece detection model.

In a third aspect, an electronic device is provided. The electronic device comprising a processor and a memory, wherein an application program executable by the processor is stored in the memory for causing the processor to execute a method for detecting workpiece as described in any of the above.

In a fourth aspect, a computer-readable medium comprising computer-readable instructions stored thereon is provided, wherein the computer-readable instructions, when executed by a processor, implement a method for detecting workpiece as described in any of the above.

In a fifth aspect, a computer program product comprising a computer program, when the computer program is executed by a processor for executing a method for detecting workpiece as described in any of the above.

BRIEF DESCRIPTION OF THE DRAWINGS

In order to make technical solutions of examples of the present disclosure clearer, accompanying drawings to be used in description of the examples will be simply introduced hereinafter. Obviously, the accompanying drawings to be described hereinafter are only some examples of the present disclosure. Those skilled in the art may obtain other drawings according to these accompanying drawings without creative labor.

FIG.1 is an exemplary flowchart of a workpiece detection method according to an embodiment of the present invention.

FIG.2A is a first schematic diagram of exemplary workpieces with the same shape and different lengths according to an embodiment of the present invention.

FIG.2B is a second schematic diagram of exemplary workpieces with the same shape and different lengths according to an embodiment of the present invention.

FIG.3 is an exemplary schematic diagram of performing data augmentation processing on a workpiece image according to an embodiment of the present invention.

FIG.4A is a schematic diagram of the feature extraction layer in a meta transformer.

FIG.4B is a schematic diagram of feature extraction layer participating in training according to an embodiment of the present invention.

FIG.4C is a schematic diagram of feature extraction layer after lightweight according to an embodiment of the present invention.

FIG.5 is a schematic diagram of lightweight workpiece detection model obtained through training according to an embodiment of the present invention.

FIG.6 is an exemplary schematic diagram of identical transformation according to the embodiment of the present invention.

FIG.7 is a comparison of the effect between embodiments of the present invention and the prior art.

FIG.8 is an exemplary schematic diagram of an apparatus for detecting workpiece according to an embodiment of the present invention.

FIG.9 is an exemplary structural diagram of an electronic device according to an embodiment of the present invention.

List of reference numbers:

| reference numbers | meanings |
| --- | --- |
| 101~104 | steps |
| 10,11,12,13 | workpieces of the same shape with different lengths |
| 14,15 | workpieces of the same shape with different lengths |
| 20 | original workpiece |
| 21,23 | first region |
| 24 | second region |
| 22 | symbol |
| 241 | subblock |
| 25 | new workpiece image |
| 31 | first batch normalization unit |
| 32 | pooling unit |
| 33 | dropout unit |
| 34,37 | adder |
| 35 | second batch normalization unit |
| 36 | convolutional unit |
| 80 | feature extraction layer during training process |
| 41 | first batch normalization unit |
| 42 | first adder |
| 43 | pooling unit |
| 44 | first 1x1 convolutional kernel |
| 45 | second adder |
| 46 | dropout unit |
| 47 | third adder |
| 48 | second batch normalization unit |
| 49 | fourth adder |
| 50 | convolutional unit |
| 51 | second 1x1 convolutional kernel |
| 52 | fifth adder |
| 90 | lightweight feature extraction layer |
| 61 | new first batch normalization unit |

(continued)

| reference numbers | meanings |
|---|---|
| 62 | new dropout unit |
| 63 | new second batch normalization unit |
| 64 | new convolutional unit |
| 70 | meta converter architecture |
| 71 | model input |
| 72 | feature extraction layer |
| 73 | classification layer |
| 74 | workpiece detection model |
| 75 | feature extraction layer |
| 84,86 | original image of original workpiece |
| 83,85 | images of workpieces with the same shape and different lengths as the original workpiece |
| 92 | detection results of prior art |
| 93 | detection results of embodiments of present invention |
| 800 | apparatus for detecting workpiece |
| 801 | data augmentation module |
| 802 | training module |
| 803 | converting module |
| 804 | detecting module |
| 900 | electronic device |
| 901 | processor |
| 902 | memory |

## DETAILED DESCRIPTION

In order to make the purpose, technical scheme, and advantages of the invention clearer, the following examples are given to further explain the invention in detail.

In order to be concise and intuitive in description, the scheme of the invention is described below by describing several representative embodiments. Many details in the embodiments are only used to help understand the scheme of the invention. However, it is obvious that the technical scheme of the invention can be realized without being limited to these details. In order to avoid unnecessarily blurring the scheme of the invention, some embodiments are not described in detail, but only the framework is given. Hereinafter, "including" refers to "including but not limited to", "according to..." refers to "at least according to..., but not limited to...". Due to the language habits of Chinese, when the number of an element is not specifically indicated below, it means that the element can be one or more, or can be understood as at least one.

In the industrial field, picking and placing workpieces for self-assembly, printed circuit boards (PCBs) for automatic testing, and electronic waste classification often rely on AI based workpiece detection. AI based workpiece detection requires a long execution time on the GPU and affects the speed of entire process, making it difficult to perform workpiece detection work on industrial edge devices such as SIMATIC 227E, SIMATIC 427E, or SIMATIC S7-1500 TM NPU. In addition, in the scenario of mixed sorting of workpieces, it is common to encounter new workpieces that have the same shape as the old one, but have a different length or width and another that is the same. Existing technologies often require the use of real workpiece images, including real new workpieces and real old workpieces, to frequently retrain AI models. However, frequent retraining of AI modules means more cost and time.

Embodiments of the present invention propose a lightweight workpiece detection scheme, which is convenient for implementation at edge devices. Moreover, for new workpieces with the same shape as the old one, but with one different length or width and another identical, there is no need to frequently retrain the model, which can detect new workpieces faster.

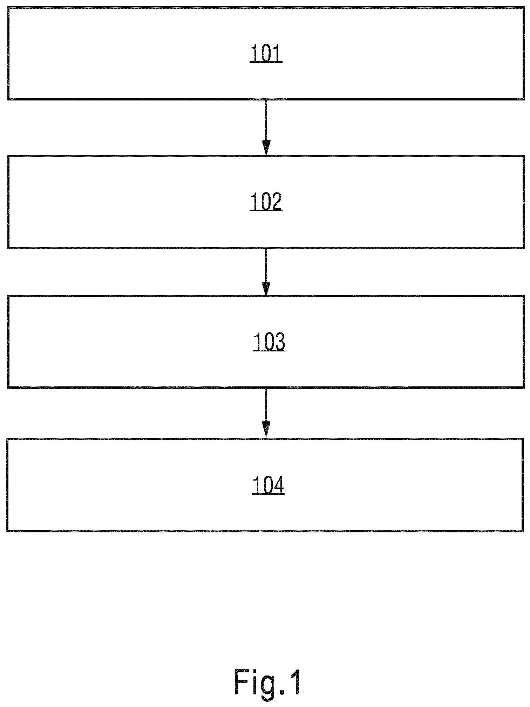

FIG.1 is an exemplary flowchart of a workpiece detection method according to an embodiment of the present invention. As shown in FIG.1, the method comprises:

Step 101: performing data augmentation on an original image of an original workpiece.

Workpiece refers to the processing object in the mechanical processing process, which can be a single part or a combination of several parts fixed together. The meaning of the original image is: compared to the new workpiece image obtained by changing size of workpiece, the size of original workpiece containing in the original image has not been changed. The original workpiece is the workpiece contained in the original image. Preferably, the original image is a real captured image of the original workpiece.

Here, performing data augmentation on the original image can include:

(1) Based on the original image, generate a new workpiece image comprised in the workpiece image group, where the workpiece in the new workpiece image has the same shape as the original workpiece. Moreover, the workpiece in the new workpiece image has the same length as the original workpiece, while the workpiece in the new workpiece image has a different width from the original workpiece.

(2) Based on the original image, generate a new workpiece image comprised in the workpiece image group, where the workpiece in the new workpiece image has the same shape as the original workpiece. Moreover, the workpiece in the new workpiece image has the same width as the original workpiece, while the workpiece in the new workpiece image has a different length from the original workpiece.

Preferably, the workpiece image group may also comprise the original image.

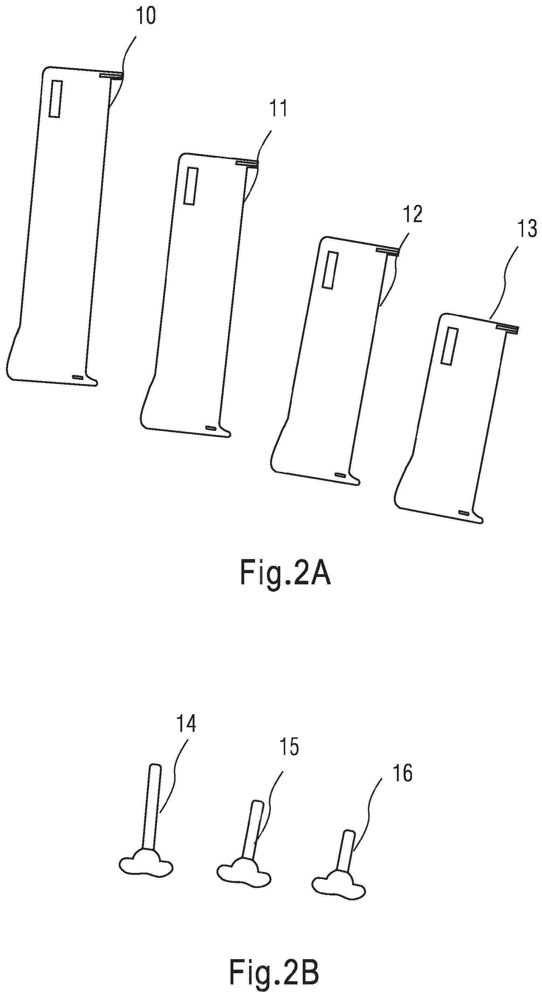

FIG.2A is a first schematic diagram of exemplary workpieces with the same shape and different lengths according to an embodiment of the present invention. In Figure 2A, workpiece 10, workpiece 11, workpiece 12, and workpiece 13 all have the same shape and width, and workpiece 10, workpiece 11, workpiece 12, and workpiece 13 each have different lengths. Figure 2B is a second schematic diagram of exemplary workpieces with the same shape and different lengths according to the embodiment of the present invention. In Figure 2B, workpiece 14, workpiece 15, and workpiece 16 all have the same shape and width, and workpiece 14, workpiece 15, and workpiece 16 each have different lengths.

In one embodiment, step 101 includes:

Sub step (1): Divide the original workpiece into a first region with invariant features and a second region with variable features;

Sub step (2): Change the length of the second region to generate a second region with changed length; Alternatively, change the width of the second region to generate a second region with changed width.

Sub step (3): Combine the first region and the second region with changed length into a new workpiece image. Alternatively, combine the first region and the second region with changed width to create a new workpiece image.

For example, the first region can be implemented as a textured region, while the second region can be implemented as a texture less region.

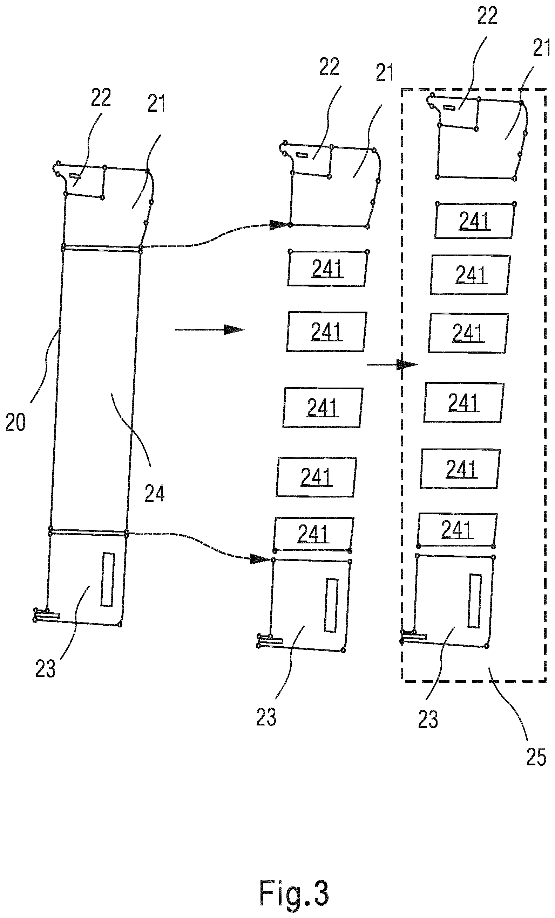

Figure 3 is an exemplary schematic diagram of performing data enhancement processing on a workpiece image according to an embodiment of the present invention. The workpiece image 20 includes first regions 21, 23, and second region 24. In the first region 21, there is also a symbol 22 (for example, implemented as a workpiece Logo). The first regions 21 and 23 have a specific shape and are not altered in length. The second region 24 is a texture less region that can be changed in length. Firstly, divide the workpiece image 20 into first regions 21, 23, and second region 24. Next, divide the second region 24 evenly into several sub blocks 241, such as 5 sub blocks. Next, sub block 241 can be copied to increase the length of the second region 24, or sub block 241 can be deleted to reduce the length of the second region 24. Finally, recombine the second region 24 with the first regions 21 and 23 after the length change to obtain a new workpiece image. For example, adding a sub block 241 in the second region 24 (totaling 6 sub blocks 241), and then recombining the second region 24 containing 6 sub blocks 241 with the first regions 21 and 23 to obtain a new workpiece image 25.

In Figure 3, an exemplary example of increasing the length of the workpiece to achieve data augmentation is illustrated, and in fact, the length of the workpiece can also be reduced to achieve data augmentation. Optionally, the length of the workpiece can be kept constant and the width of the workpiece can be changed to achieve data augmentation.

Step 102: performing training on a neural network model comprising multiple feature extraction branches to obtain a workpiece detection model based on a workpiece image group obtained through the data augmentation.

Here, the workpiece image group may include: the workpiece image (original image) before data enhancement in step 101 and the new workpiece image generated based on data enhancement in step 101.

In one implementation, the process of obtaining a neural network model comprising multiple feature extraction branches specifically includes: obtaining a meta transformer; Replace the feature extraction layer of the meta transformer with multiple feature extraction branches, including at least one of the following: short cut to adder; 1x1 convolutional kernel in parallel with pooling units; 1x1 convolutional kernel in parallel with convolutional units; determining the replaced meta transformer as a neural network model.

Meta transformer is a new framework for multimodal learning, which is used to process and associate information from multiple modalities. Although there are inherent gaps between various data, the meta transformer utilizes a frozen encoder to extract advanced semantic features from input data in a shared tag space, without the need for paired multimodal training data. This framework consists of a unified data marker, a pattern sharing encoder, and task headers for various downstream tasks.

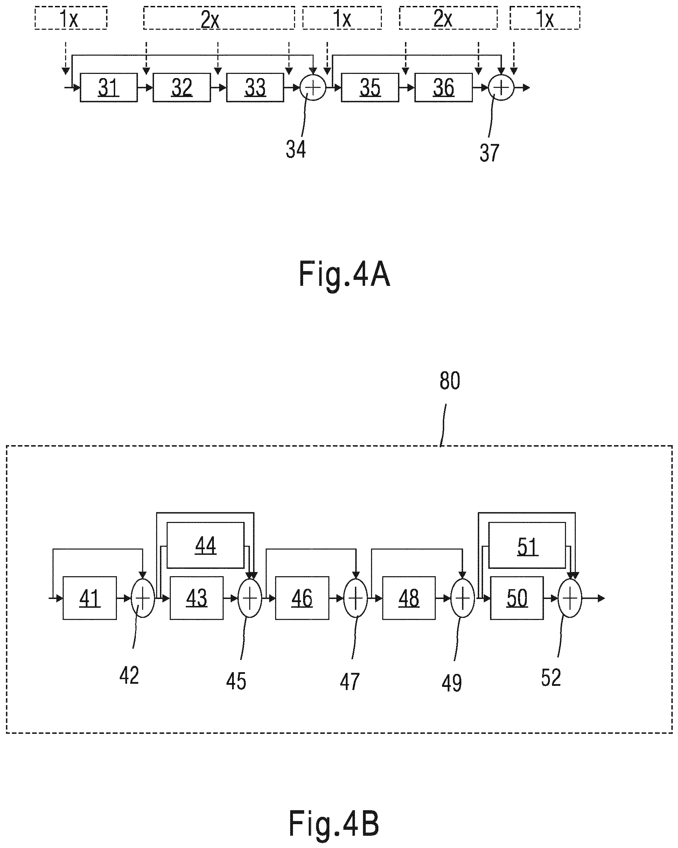

Figure 4A is a schematic diagram of the feature extraction layer in a meta converter. The feature extraction layer in the meta transformer includes: first batch normalization (BN) unit 31, pooling unit 32, drop out unit 33, second BN unit 35, convolution unit 36, adder 33 connected between drop out unit 33 and second BN unit 35, and adder 37 after convolution unit 36. Among them, the data input of pooling unit 32, data input of drop out unit 33, and data input of convolution unit 36 all require 2 storage spaces (2 x memory).

At present, there are few feature extraction branches in the feature extraction layer of the meta transformer, which makes it difficult to ensure detection effect. By replacing the feature extraction layer of the meta transformer with multiple feature extraction branches, the detection effect can be improved. Multiple feature extraction branches can be achieved through various methods, such as adding at least one of the following: short cut to adder; 1x1 convolutional kernel in parallel with pooling unit; 1x1 convolutional kernel in parallel with convolutional unit, and so on.

Figure 4B is a schematic diagram of the feature extraction layer participating in training according to an embodiment of the present invention. In Figure 4B, the feature extraction layer 80 includes: first BN unit 41, first adder 42, pooling unit 43, first 1x1 convolution core 44, second adder 45, drop out unit 46, third adder 47, second BN unit 48, fourth adder 49, convolution unit 50 (such as 3x3 convolution core), second 1x1 convolution core 51, and fifth adder 52. Moreover, the output of the first adder 42 has a short cut to the input of the second adder 45. The output of the second adder 45 has a short cut to the input of the third adder 47. The output of the third adder 47 has a short cut to the input of the fourth adder 49. The output of the fourth adder 49 has a short cut to the input of the fifth adder 52. The first 1x1 convolution kernel 44 is parallel to pooling unit 43, and the second 1x1 convolution kernel 51 is parallel to the convolution unit 50.

Compared to the feature extraction layer in the meta converter, the feature extraction layer 80 participating in the training has more feature extraction branches, thus having better feature extraction performance.

Based on the workpiece image group obtained after data augmentation (including the original workpiece image before data augmentation and the new workpiece images generated based on data augmentation), a meta transformer with a replaced feature extraction layer is trained to obtain a workpiece detection model suitable for detecting workpieces with the same shape and at least one different dimension as the original workpiece.

Step 103: converting the workpiece detection model into a lightweight workpiece detection model.

Here, based on identity transformation method, the workpiece detection model in step 102 is transformed into a lightweight workpiece detection model, which facilitates the deployment of workpiece detection model at edge devices.

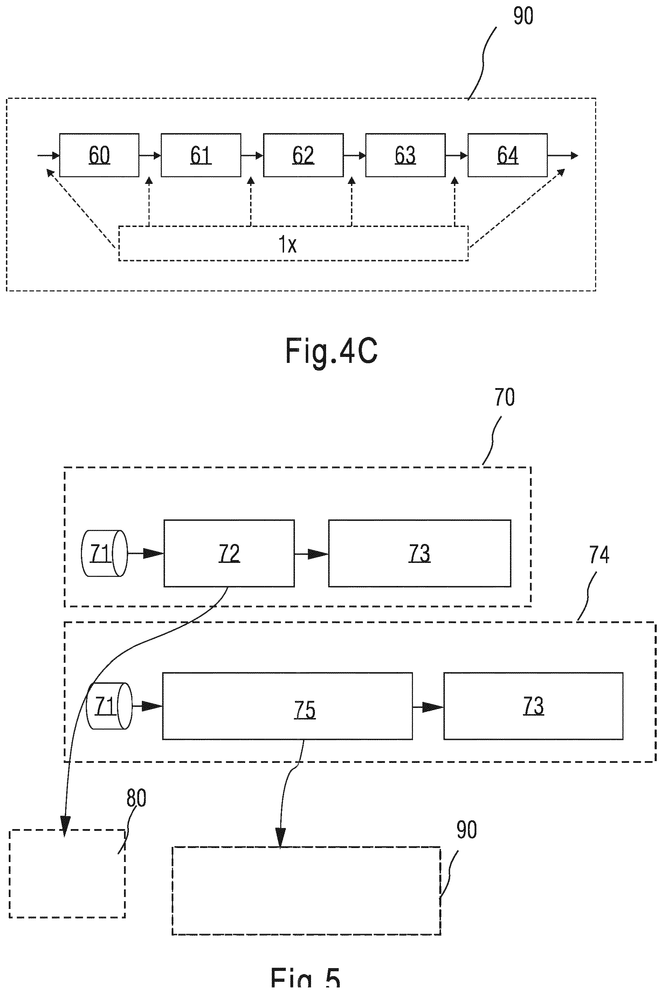

FIG.4C is a schematic diagram of feature extraction layer after lightweight according to an embodiment of the present invention. As shown in Figure 4C, lightweight conversion can include:

(1) Based on identical transformation method, the first BN unit 41, the first adder 42 connected to the first BN unit 41, and a short cut from the model input to the first adder 42 are converted into a new first BN unit 60.
(2) Based on identical transformation method, pooling unit 43, the second adder 45 connected to pooling unit 43, 1x1 convolutional kernel 44 in parallel with pooling unit 43, and a short cut from the first adder 43 to the second adder 43 are converted into a new pooling unit 61.
(3) Based on identical transformation method, drop out unit 46, third adder 47 connected to the drop out unit 46, and a short cut from the input of the drop out unit 46 to third adder 47 are converted into a new drop out unit 62.
(4) Based on identical transformation method, second BN unit 48, fourth adder 49 connected to the second BN unit 48, and short cut from the input of the second BN unit 48 to fourth adder 49 are converted into a new second BN unit 63.
(5) Based on identical transformation method, convolutional unit 50, fifth adder 52, 1x1 convolutional kernel 51 in parallel with convolutional unit 50, and short cut from the input of convolutional unit 50 to the fifth adder 52 are converted into a new convolutional unit 64.

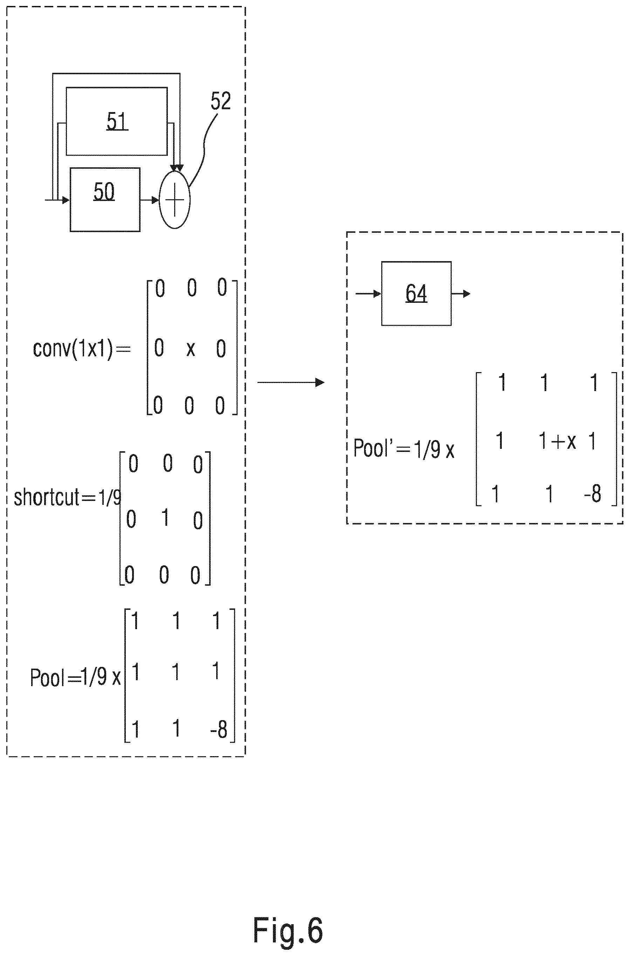

FIG.6 is an exemplary schematic diagram of identical transformation according to the embodiment of the present invention. In Figure 6, pooling unit 43, second adder 45 connected to pooling unit 43, 1x1 convolutional kernel 44 in parallel with pooling unit 43, and short cut from the first adder 43 to the second adder 43 l are converted into a new pooling unit 61.

Connect the new first BN unit 60, the new pooling unit 61, the new drop out unit 62, the new second BN unit 63, and the new convolution unit 64 in sequence to form a feature detection layer 90 in the lightweight workpiece detection model. In the feature detection layer 90 of the lightweight workpiece detection model, one storage space (1 x memory) is required for data storage, thus reducing storage pressure.

FIG.5 is a schematic diagram of lightweight workpiece detection model obtained through training according to an embodiment of the present invention. The meta transformer architecture 70 includes model input 71, feature extraction layer 72, and classification layer 73. For example, the feature extraction layer 72 has a structure shown in Figure 4A.

Firstly, replace the feature extraction layer 72 in the meta transformer architecture 70 with the feature extraction layer 80 in Figure 4B. Then, using workpiece images in the workpiece image group, to train the meta transformer architecture 70 (where the feature extraction layer 72 is replaced by the feature extraction layer 80). The workpiece image group includes original workpiece image and new workpiece images, where new workpiece images have the same shape and different widths or lengths as the original workpiece. The feature extraction layer 75 in the trained meta converter architecture 74 is transformed into lightweight feature extraction layer 90 in Figure 4C through identity transformation, thereby obtaining a lightweight workpiece detection model. Then, the lightweight workpiece detection model can be deployed to industrial edge devices to detect mixed workpieces with the same shape and different lengths or widths.

Step 104: performing detection on workpieces with the same shape and at least one different dimension as the original workpiece based on the lightweight workpiece detection model.

Here, detecting workpieces can include identifying workpieces, classifying workpieces, and locating workpieces, among others.

In one embodiment, step 102 includes: training a neural network model based on a workpiece image group containing images with local labels of the first region and the second region therein, to obtain a workpiece detection model with the ability to detect the first and second regions. This method includes: deploying the lightweight workpiece detection model in an edge device; inputting a reference workpiece image comprising preset grasping point coordinates into the lightweight workpiece detection model to output center coordinates of the first region and center coordinates of the second region in the reference workpiece image; storing associatively the center coordinates of the first region in the reference workpiece image, the center coordinates of the second region in the reference workpiece image, and the preset gripping point coordinates; inputting an image of workpiece to be detected into the lightweight workpiece detection model to output center coordinates of the first region in the image of workpiece to be detected and center coordinates of the second region in the image of workpiece to be detected; determining gripping point coordinates in the image of workpiece to be detected based on the center coordinates of the first region in the reference workpiece image, the center coordinates of the second region in the reference workpiece image, the preset gripping point coordinates, the center coordinates of the first region in the image of workpiece to be detected, and the center coordinates of the second region in the image of workpiece to be detected.

For example, user calibrates gripping point in the reference workpiece image, assuming that the gripping point coordinates are $(x_b, y_b)$. Input the reference workpiece image into the lightweight workpiece detection model in edge device to detect center coordinates $(x_a, y_a)$ of the first region in the reference workpiece image and center coordinates $(x_c, y_c)$ of the second region in the reference workpiece image. Then, associatively store center coordinates of the first region $(x_a, y_a)$, center coordinates of the second region $(x_c, y_c)$, and coordinates of the grasping point $(x_b, y_b)$.

Next, input an image of workpiece to be detected (such as the workpiece in the image of the workpiece to be detected having the same shape and different length as the reference workpiece in the reference workpiece image) into the lightweight workpiece detection model. The lightweight workpiece detection model outputs center coordinates $(x_{newa}, y_{newa})$ of the first region in the workpiece image to be detected and center coordinates $(x_{newc}, y_{newc})$ of the second region in the workpiece image to be detected by the lightweight workpiece detection model.

Then, the coordinates $(x_{newb}, y_{newb})$ of the gripping point in the image of the workpiece to be detected can be calculated as:

$$x_{newb} = \frac{x_{newa} + \frac{x_b - x_a}{x_c - x_b} * x_{newc}}{1 + \frac{x_b - x_a}{x_c - x_b}}; y_{newb} = \frac{y_{newa} + \frac{y_b - y_a}{y_c - y_b} * y_{newc}}{1 + \frac{y_b - y_a}{y_c - y_b}}$$

Therefore, it is convenient and flexible to quickly obtain the gripping point coordinates of new workpieces, especially suitable for sorting scenarios of mixed workpieces with the same shape but different lengths or widths.

In one embodiment, step 102 includes: training the neural network model based on global label of workpiece image, local label of the first region, and local label of the second region to obtain the workpiece detection model. The workpiece detection model can detect the overall contour of the workpiece image, as well as the respective contours of the first and second regions in the workpiece image. Step 104 includes: inputting the tested image containing multiple workpieces with overlapping relationships into a lightweight workpiece detection model; Obtain the detection results of each workpiece from a lightweight workpiece detection model, where the detection results of each workpiece include their respective first region and second region. The overall contour to which the component belongs can be determined based on the overall contour with the maximum overlap among multiple overall contours determined by the component (including the first and second regions) and the global label.

For example, if three workpieces in the image have overlapping relationships, the workpiece detection model recognizes: overall contour 1 of the first workpiece, overall contour 2 of the second workpiece, and overall contour 3 of the third workpiece. The workpiece detection model also recognizes: first region 1, first region 2, and first region 3 in the three workpieces; second region 1, second region 2, and second region 3 in the three workpieces. If the overall contour that most overlaps with the first region 1 is overall contour 1, and the overall contour that most overlaps with the second region 2 is overall contour 1. Then determine that the first region 1 and the second region 2 are components of the overall contour 1. Similarly, determine the respective components of overall contour 2 and overall contour 3.

The workpiece detection model based on global and local label training can accurately detect multiple workpieces with overlapping relationships separately.

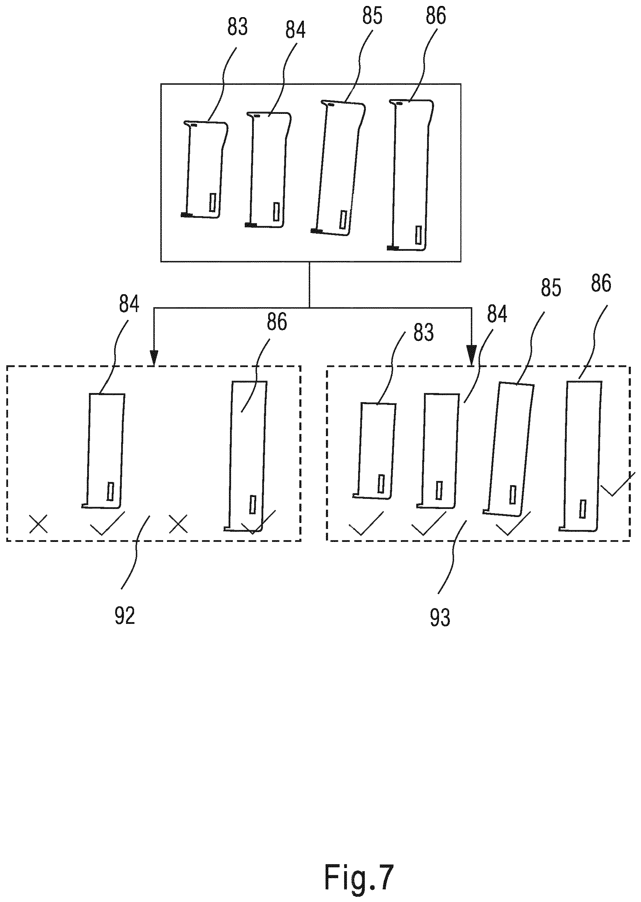

FIG.7 is a comparison of the effect between embodiments of the present invention and the prior art. A workpiece detection model in prior art is trained through original workpiece image 84 and original workpiece 86 image. Input original workpiece image 84, original workpiece image 86, and workpiece images 83 and 85 with the same shape and different lengths as original workpiece image into workpiece detection model in prior art, and obtain detection results 92. According to detection results 92, only original workpiece image 84 and the original workpiece image 86 can be recognized, but the workpiece images 83 and 85 cannot be recognized.

In embodiments of the present invention, data augmentation processing is performed on the original workpiece image 84 (or original workpiece image 86) to generate workpiece images 83, 85 with the same shape and different lengths as the original workpiece image. A workpiece detection model is trained through original workpiece image 84, original workpiece 86 image, and workpiece images 83, 85. Input original workpiece image 84, original workpiece image 86, and workpiece images 83 and 85 with the same shape and different lengths as the original workpiece image into the workpiece detection model of present invention to obtain detection results of embodiments of present invention. In the detection results, both original workpiece images 84,86 and workpiece images 83 and 85 can be recognized.

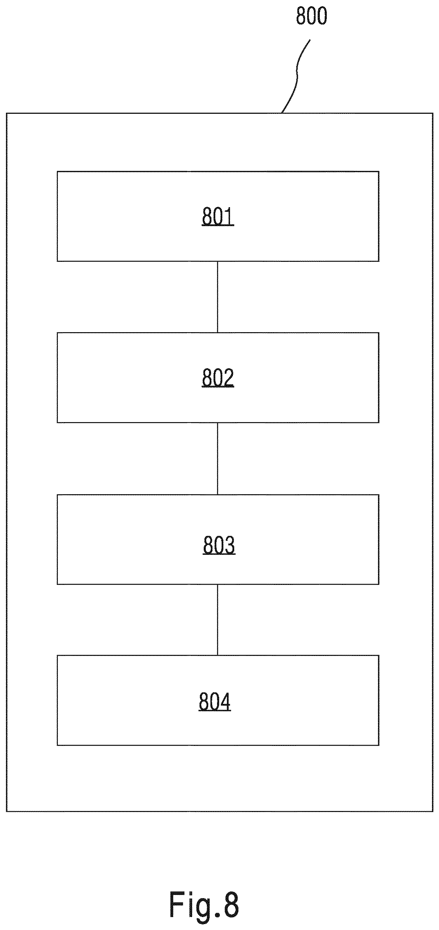

FIG.8 is an exemplary schematic diagram of an apparatus for detecting workpiece according to an embodiment of the present invention. As shown in FIG.8, apparatus 800 for detecting workpiece comprising:

a data augmentation module 801, configured to perform data augmentation on an original image of an original workpiece; a training module 802, configured to perform training on a neural network model comprising multiple feature extraction branches to obtain a workpiece detection model based on a workpiece image group obtained through the data augmentation; a converting module 803, configured to convert the workpiece detection model into a lightweight workpiece detection model; and a detecting module 804, configured to perform detection on workpieces with the same shape and at least one different dimension as the original workpiece based on the lightweight workpiece detection model.

In one embodiment, data augmentation module 801, configured to generate a new workpiece image in the workpiece image group based on the original image, a workpiece in the new workpiece image has the same shape as the original workpiece; wherein the length of workpiece in the new workpiece image is the same as that of the original workpiece, the width of workpiece in the new workpiece image is different from that of the original workpiece; or wherein the width of workpiece in the new workpiece image is the same as that of the original workpiece, the length of workpiece in the new workpiece image is different from that of the original workpiece.

In one embodiment, data augmentation module 801, configured to divide the original workpiece in the original image into a first region with invariant features and a second region with variable features; change the length of the second region to generate a second region with changed length; change the width of the second region to generate a second region with changed width; combine the first region and the second region with changed length to form the new workpiece image; or combining the first region and the second region with changed width to form the new workpiece image.

In one embodiment, training module 802, configured to obtain a meta transformer; replace a feature extraction layer of the meta transformer with multiple feature extraction branches, wherein the multiple feature extraction branches comprise at least one of the following: shortcut to adder; 1x1 convolutional kernel in parallel with pooling unit; 1x1 convolutional kernel in parallel with convolutional unit; determine the replaced meta transformer as the neural network model.

In one embodiment, converting module 803, configured to convert a first batch normalization unit, a first adder connected to the first batch normalization unit, and a shortcut from model input to the first adder in the workpiece detection model into a new first batch normalization unit, based on an identical transformation method; convert a pooling unit, a second adder connected to the pooling unit, a 1x1 convolutional kernel in parallel with the pooling unit, and a shortcut from the first adder to the second adder in the workpiece detection model into a new pooling unit, based on an identical transformation method; convert a dropout unit, a third adder connected to the dropout unit, and a shortcut from the input of the dropout unit to the third adder in the workpiece detection model into a new dropout unit, based on an identical transformation method; convert a second batch normalization unit, a fourth adder connected to the second batch normalization unit, and a shortcut from the input of the second batch normalization unit to the fourth adder in the workpiece detection model into a new second batch normalization unit, based on an identical transformation method; convert a convolutional unit, a fifth adder, a 1x1 convolutional kernel in parallel with the convolutional unit, and a shortcut from the input of the convolutional unit to the fifth adder in the workpiece detection model into a new convolutional unit, based on an identical transformation method; connect the new first batch normalization unit, the new pooling unit, the new dropout unit, the new second batch normalization unit, and the new convolution unit in sequence to form a feature detection layer in the lightweight workpiece detection model.

In one embodiment, training module 802, configured to train the neural network model based on a workpiece image in the workpiece image group comprising a local label of the first region and a local label of the second region; detecting module 804, configured to deploy the lightweight workpiece detection model in an edge device; input a reference workpiece image comprising preset grasping point coordinates into the lightweight workpiece detection model to output center coordinates of the first region and center coordinates of the second region in the reference workpiece image; store associatively the center coordinates of the first region in the reference workpiece image, the center coordinates of the second region in the reference workpiece image, and the preset gripping point coordinates; input an image of workpiece to be detected into the lightweight workpiece detection model to output center coordinates of the first region in the image of workpiece to be detected and center coordinates of the second region in the image of workpiece to be detected; determine gripping point coordinates in the image of workpiece to be detected based on the center coordinates of the first region in the reference workpiece image, the center coordinates of the second region in the reference workpiece image, the preset gripping point coordinates, the center coordinates of the first region in the image of workpiece to be detected, and the center coordinates of the second region in the image of workpiece to be detected.

In one embodiment, training module 802, configured to train the neural network model based on a workpiece image in the workpiece image group comprising a local label of the first region, a local label of the second region and a global label of the workpiece image; detecting module 804, configured to input an image comprising multiple workpieces with overlapping relationships into the lightweight workpiece detection model; obtain detection results for each of the multiple workpieces from the lightweight workpiece detection model, wherein each detection result for each workpiece comprises first region and second region of corresponding workpiece.

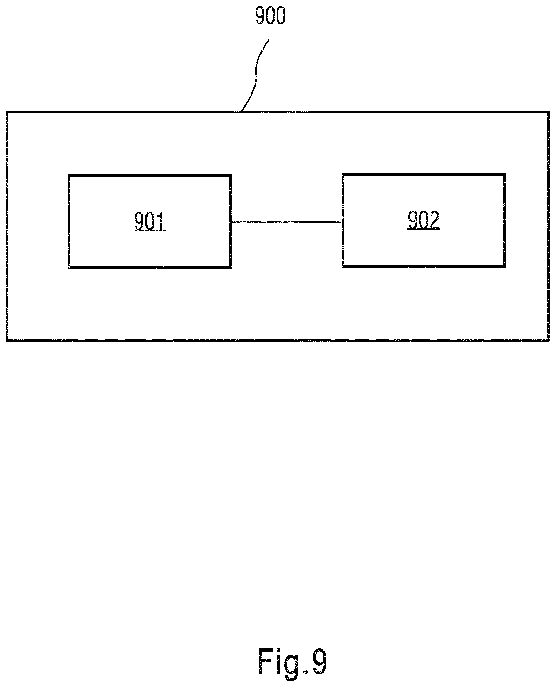

The embodiment of the present invention also proposes an electronic device with a processor memory architecture. Figure 9 is an exemplary structural diagram of an electronic device with a processor memory architecture according to an embodiment of the present invention. As shown in Figure 9, electronic device 900 includes a processor 901, a memory 902, and a computer program stored on memory 902 that can run on processor 901. When the computer program is executed by processor 901, the workpiece detection method as described in either of the above methods is implemented. Among them, memory 902 can be implemented as various storage media such as electrically erasable programmable read-only memory (EEPROM), flash memory, programmable program read-only memory (PROM), etc. Processor 901 can be implemented to include one or more central processors or one or more field programmable gate arrays, wherein the field programmable gate array integrates one or more central processor cores. Specifically, the central processing unit or core can be implemented as a CPU, MCU, DSP, and so on.

It should be noted that not all steps and modules in the above processes and structural diagrams are necessary, and some steps or modules can be ignored according to actual needs. The execution sequence of each step is not fixed and can be adjusted as needed. The division of each module is only for the convenience of describing the functional division used. In actual implementation, a module can be divided into multiple modules, and the functions of multiple modules can also be implemented by the same module. These modules can be in the same device or different devices.

The hardware modules in each implementation can be implemented mechanically or electronically. For example, a hardware module can include specially designed permanent circuits or logic devices (such as dedicated processors, such as FPGA or ASIC) to complete specific operations. Hardware modules can also include programmable logic devices or circuits temporarily configured by software (such as general-purpose processors or other programmable processors) for performing specific operations. As for the specific use of mechanical methods, either dedicated permanent circuits or temporarily configured circuits (such as software configuration) to implement hardware modules, it can be determined based on cost and time considerations.

**Claims**

1. A method for detecting workpieces, comprising:

    performing (101) data augmentation on an original image of an original workpiece by generating a workpiece image group of new workpiece images, wherein each new workpiece image comprises a new workpiece with the same shape as the original workpiece but with either a different length or a different width;
    performing training (102) on a neural network model (70) comprising a feature extraction layer (80) with multiple feature extraction branches to obtain a workpiece detection model based on the workpiece image group obtained through the data augmentation;
    converting (103) the workpiece detection model (74) into a lightweight workpiece detection model by replacing multi-branch segments of a trained multi-branch feature extraction layer (75) of the workpiece detection model (70) by single-branch segments applying an identical transformation as the replaced multi-branch segments to convert the trained multi-branch feature extraction layer (75) into a lightweight feature extraction layer (90); and

performing (104) detection on workpieces with the same shape as the original workpiece but either a different length or a different width than the original workpiece based on the lightweight workpiece detection model.

2. The method of claim 1, wherein generating a new workpiece image in the workpiece image group based on the original image comprises:

dividing the original workpiece in the original image into a first region with invariant features and a second region with variable features;
changing the length of the second region to generate a second region with changed length, or alternatively changing the width of the second region to generate a second region with changed width;
combining the first region and the second region with changed length to form the new workpiece image; or alternatively combining the first region and the second region with changed width to form the new workpiece image.

3. The method of claim 1, comprising:

obtaining a multilayer neural network model (70) comprising a feature extraction layer (72);
replacing a feature extraction layer (72) of the multilayer neural network model by a multibranch feature extraction layer (80) with multiple feature extraction branches, wherein the multiple feature extraction branches comprise at least one of the following: shortcut to adder; 1x1 convolutional kernel in parallel with pooling unit; 1x1 convolutional kernel in parallel with convolutional unit;
determining the replaced multilayer neural network model (70) as the neural network model.

4. The method of claim 3, wherein converting (103) the workpiece detection model into a lightweight workpiece detection model comprises:

converting a first batch normalization unit, a first adder connected to the first batch normalization unit, and a shortcut from model input to the first adder in the workpiece detection model into a new first batch normalization unit, based on an identical transformation method which results in a unit applying an identical transformation;
converting a pooling unit, a second adder connected to the pooling unit, a 1x1 convolutional kernel in parallel with the pooling unit, and a shortcut from the first adder to the second adder in the workpiece detection model into a new pooling unit, based on an identical transformation method which results in a unit applying an identical transformation;
converting a dropout unit, a third adder connected to the dropout unit, and a shortcut from the input of the dropout unit to the third adder in the workpiece detection model into a new dropout unit, based on an identical transformation method which results in a unit applying an identical transformation;
converting a second batch normalization unit, a fourth adder connected to the second batch normalization unit, and a shortcut from the input of the second batch normalization unit to the fourth adder in the workpiece detection model into a new second batch normalization unit, based on an identical transformation method which results in a unit applying an identical transformation;
converting a convolutional unit, a fifth adder, a 1x1 convolutional kernel in parallel with the convolutional unit, and a shortcut from the input of the convolutional unit to the fifth adder in the workpiece detection model into a new convolutional unit, based on an identical transformation method which results in a unit applying an identical transformation;
connecting the new first batch normalization unit, the new pooling unit, the new dropout unit, the new second batch normalization unit, and the new convolution unit in sequence to form a feature detection layer in the lightweight workpiece detection model.

5. The method of claim 2, wherein performing training (102) on a neural network model comprising:
training the neural network model based on a workpiece image in the workpiece image group comprising a local label of the first region and a local label of the second region, wherein the method comprises:

deploying the lightweight workpiece detection model in an edge device;
inputting a reference workpiece image comprising preset grasping point coordinates into the lightweight workpiece detection model to output center coordinates of the first region and center coordinates of the second region in the reference workpiece image;
storing associatively the center coordinates of the first region in the reference workpiece image, the center coordinates of the second region in the reference workpiece image, and the preset gripping point coordinates;

inputting an image of workpiece to be detected into the lightweight workpiece detection model to output center coordinates of the first region in the image of workpiece to be detected and center coordinates of the second region in the image of workpiece to be detected;

determining gripping point coordinates in the image of workpiece to be detected based on the center coordinates of the first region in the reference workpiece image, the center coordinates of the second region in the reference workpiece image, the preset gripping point coordinates, the center coordinates of the first region in the image of workpiece to be detected, and the center coordinates of the second region in the image of workpiece to be detected.

6. The method of claim 2,
wherein performing training (102) on a neural network model comprising:
training the neural network model based on a workpiece image in the workpiece image group comprising a local label of the first region, a local label of the second region and a global label of the workpiece image, wherein the method comprises:

inputting an image comprising multiple workpieces with overlapping relationships into the lightweight workpiece detection model, wherein an overlapping relationship refers to the case where contours of multiple workpieces overlap partially in the image;

obtaining detection results for each of the multiple workpieces from the lightweight workpiece detection model, wherein each detection result for each workpiece comprises first region and second region of corresponding workpiece.

7. An apparatus for detecting workpieces, comprising:

a data augmentation module (801), configured to perform data augmentation on an original image of an original workpiece by generating a workpiece image group of new workpiece images, wherein each new workpiece image comprises a new workpiece with the same shape as the original workpiece but with either a different length or a different width;

a training module (802), configured to perform training on a neural network model comprising a feature extraction layer (80) with multiple feature extraction branches to obtain a workpiece detection model based on the workpiece image group obtained through the data augmentation;

a converting module (803), configured to convert the workpiece detection model into a lightweight workpiece detection model by replacing multi-branch segments of a trained multi-branch feature extraction layer (75) of the workpiece detection model (70) by single-branch segments applying an identical transformation as the replaced multi-branch segments to convert the trained multi-branch feature extraction layer (75) into a lightweight feature extraction layer (90); and

a detecting module (804), configured to perform detection on workpieces with the same shape as the original workpiece but either a different length or a different width than the original workpiece based on the lightweight workpiece detection model.

8. An electronic device, comprising a processor (901) and a memory (902), wherein an application program executable by the processor (901) is stored in the memory (902) for causing the processor (901) to execute a method for detecting workpiece according to any one of claims 1-6.

9. A computer-readable medium comprising computer-readable instructions stored thereon, wherein the computer-readable instructions for executing a method for detecting workpiece according to any one of claims 1-6.

10. A computer program product comprising a computer program, upon the computer program is executed by a processor for executing a method for detecting workpiece according to any one of claims 1-6.

**Patentansprüche**

1. Verfahren zum Erkennen von Werkstücken, umfassend:

Durchführen (101) einer Datenerweiterung an einem Originalbild eines Originalwerkstücks, indem eine Werkstückbildgruppe von neuen Werkstückbildern erzeugt wird, wobei jedes neue Werkstückbild ein neues Werkstück mit der gleichen Form wie das Originalwerkstück, aber entweder mit einer unterschiedlichen Länge oder einer unterschiedlichen Breite umfasst;

Durchführen eines Trainierens (102) an einem neuronalen Netzwerkmodell (70), das eine Merkmalsextraktionsschicht (80) mit mehreren Merkmalsextraktionszweigen umfasst, um, basierend auf der Werkstückbildgruppe, die durch die Datenerweiterung erhalten wird, ein Werkstückerkennungsmodell zu erhalten;

Umwandeln (103) des Werkstückerkennungsmodells (74) in ein schlankes Werkstückerkennungsmodell, indem Mehrzweigsegmente einer trainierten Mehrzweig-Merkmalsextraktionsschicht (75) des Werkstückerkennungsmodells (70) durch Einzelzweigsegmente ersetzt werden, die eine identische Transformation wie die ersetzten Mehrzweigsegmente anwenden, um die trainierte Mehrzweig-Merkmalsextraktionsschicht (75) in eine schlanke Merkmalsextraktionsschicht (90) umzuwandeln; und

Durchführen (104), basierend auf dem schlanken Werkstückerkennungsmodell, einer Erkennung an Werkstücken mit der gleichen Form wie das Originalwerkstück, aber entweder mit einer anderen Länge oder einer anderen Breite als das Originalwerkstück.

2. Verfahren nach Anspruch 1, wobei das Erzeugen eines neuen Werkstückbildes in der Werkstückbildgruppe basierend auf dem Originalbild umfasst:

Aufteilen des Originalwerkstücks in dem Originalbild in einen ersten Bereich mit unveränderlichen Merkmalen und einen zweiten Bereich mit veränderlichen Merkmalen;

Ändern der Länge des zweiten Bereichs, um einen zweiten Bereich mit einer veränderten Länge zu erzeugen, oder alternativ Ändern der Breite des zweiten Bereichs, um einen zweiten Bereich mit einer veränderten Breite zu erzeugen;

Kombinieren des ersten Bereichs und des zweiten Bereichs mit der veränderten Länge, um das neue Werkstückbild zu bilden; oder

alternativ Kombinieren des ersten Bereichs und des zweiten Bereichs mit der veränderten Breite, um das neue Werkstückbild zu bilden.

3. Verfahren nach Anspruch 1, umfassend:

Erhalten eines mehrschichtigen neuronalen Netzwerkmodells (70), das eine Merkmalsextraktionsschicht (72) umfasst;

Ersetzen einer Merkmalsextraktionsschicht (72) des mehrschichtigen neuronalen Netzwerkmodells durch eine Mehrzweig-Merkmalsextraktionsschicht (80) mit mehreren Merkmalsextraktionszweigen, wobei die mehreren Merkmalsextraktionszweige mindestens einen der Folgenden umfassen: einen Schnellzugriff auf einen Addierer; einen 1x1 Faltungskern parallel zu einer Pooling-Einheit; einen 1x1 Faltungskern parallel zu einer Faltungseinheit;

Ermitteln des ersetzten mehrschichtigen neuronalen Netzwerkmodells (70) als das neuronale Netzwerkmodell.

4. Verfahren nach Anspruch 3, wobei das Umwandeln (103) des Werkstückerkennungsmodells in ein schlankes Werkstückerkennungsmodell umfasst:

Umwandeln einer ersten Batch-Normalisierungseinheit, eines ersten Addierers, der mit der ersten Batch-Normalisierungseinheit verbunden ist, und eines Schnellzugriffs von der Modelleingabe auf den ersten Addierer in dem Werkstückerkennungsmodell in eine neue erste Batch-Normalisierungseinheit, basierend auf einem identischen Transformationsverfahren, das zu einer Einheit führt, die eine identische Transformation anwendet;

Umwandeln einer Pooling-Einheit, eines zweiten Addierers, der mit der Pooling-Einheit verbunden ist, eines 1x1-Faltungskerns parallel zu der Pooling-Einheit und eines Schnellzugriffs von dem ersten Addierer auf den zweiten Addierer in dem Werkstückerkennungsmodell in eine neue Pooling-Einheit, basierend auf einem identischen Transformationsverfahren, das zu einer Einheit führt, die eine identische Transformation anwendet;

Umwandeln einer Dropout-Einheit, eines dritten Addierers, der mit der Dropout-Einheit verbunden ist, und eines Schnellzugriffs von dem Eingang der Dropout-Einheit auf den dritten Addierer in dem Werkstückerkennungsmodell in eine neue Dropout-Einheit, basierend auf einem identischen Transformationsverfahren, das zu einer Einheit führt, die eine identische Transformation anwendet;

Umwandeln einer zweiten Batch-Normalisierungseinheit, eines vierten Addierers, der mit der zweiten Batch-Normalisierungseinheit verbunden ist, und eines Schnellzugriffs von der Eingabe der zweiten Batch-Normalisierungseinheit auf den vierten Addierer in dem Werkstückerkennungsmodell in eine neue zweite Batch-Normalisierungseinheit, basierend auf einem identischen Transformationsverfahren, das zu einer Einheit führt, die eine identische Transformation anwendet;

Umwandeln einer Faltungseinheit, eines fünften Addierers, eines 1x1-Faltungskerns parallel zu der Faltungseinheit und eines Schnellzugriffs von der Eingabe der Faltungseinheit auf den fünften Addierer in dem Werkstückerkennungsmodell in eine neue Faltungseinheit, basierend auf einem identischen Transformationsverfahren, das zu einer Einheit führt, die eine identische Transformation anwendet;

Verbinden der neuen ersten Batch-Normalisierungseinheit, der neuen Pooling-Einheit, der neuen Dropout-Einheit, der neuen zweiten Batch-Normalisierungseinheit und der neuen Faltungseinheit der Reihe nach, um eine Merkmalserkennungsschicht in dem schlanken Werkstückerkennungsmodell zu bilden.

5. Verfahren nach Anspruch 2, wobei das Durchführen eines Trainierens (102) an einem neuronalen Netzwerkmodell umfasst:

Trainieren des neuronalen Netzwerkmodells basierend auf einem Werkstückbild in der Werkstückbildgruppe, das eine lokale Markierung des ersten Bereichs und eine lokale Markierung des zweiten Bereichs umfasst, wobei das Verfahren umfasst:

Einsetzen des schlanken Werkstückerkennungsmodells in einer Randvorrichtung;
Eingeben eines Referenzwerkstückbildes, das voreingestellte Greifpunktkoordinaten umfasst, in das schlanke Werkstückerkennungsmodell, um Mittelpunktkoordinaten des ersten Bereichs und Mittelpunktkoordinaten des zweiten Bereichs in dem Referenzwerkstückbild auszugeben;
assoziatives Speichern der Mittelpunktkoordinaten des ersten Bereichs in dem Referenzwerkstückbild, der Mittelpunktkoordinaten des zweiten Bereichs in dem Referenzwerkstückbild und der voreingestellten Greifpunktkoordinaten;
Eingeben eines Bildes eines zu erkennenden Werkstücks in das schlanke Werkstückerkennungsmodell, um Mittelpunktkoordinaten des ersten Bereichs in dem Bild des zu erkennenden Werkstücks und Mittelpunktkoordinaten des zweiten Bereichs in dem Bild des zu erkennenden Werkstücks auszugeben;
Ermitteln von Greifpunktkoordinaten in dem Bild des zu erkennenden Werkstücks basierend auf den Mittelpunktkoordinaten des ersten Bereichs in dem Referenzwerkstückbild, den Mittelpunktkoordinaten des zweiten Bereichs in dem Referenzwerkstückbild, den voreingestellten Greifpunktkoordinaten, den Mittelpunktkoordinaten des ersten Bereichs in dem Bild des zu erkennenden Werkstücks und den Mittelpunktkoordinaten des zweiten Bereichs in dem Bild des zu erkennenden Werkstücks.

6. Verfahren nach Anspruch 2, wobei das Durchführen eines Trainierens (102) an einem neuronalen Netzwerkmodell umfasst:
Trainieren des neuronalen Netzwerkmodells basierend auf einem Werkstückbild in der Werkstückbildgruppe, das eine lokale Markierung des ersten Bereichs, eine lokale Markierung des zweiten Bereichs und eine globale Markierung des Werkstückbildes umfasst, wobei das Verfahren umfasst:

Eingeben eines Bildes, das mehrere Werkstücke mit überlappenden Beziehungen umfasst, in das schlanke Werkstückerkennungsmodell, wobei sich eine überlappende Beziehung auf den Fall bezieht, in dem sich Konturen von mehreren Werkstücken in dem Bild teilweise überlappen;
Erhalten von Erkennungsergebnissen für jedes der mehreren Werkstücke aus dem schlanken Werkstückerkennungsmodell, wobei jedes Erkennungsergebnis für jedes Werkstück einen ersten Bereich und einen zweiten Bereich eines entsprechenden Werkstücks umfasst.

7. Einrichtung zum Erkennen von Werkstücken, umfassend:

ein Datenerweiterungsmodul (801), das konfiguriert ist zum Durchführen einer Datenerweiterung an einem Originalbild eines Originalwerkstücks, indem eine Werkstückbildgruppe von neuen Werkstückbildern erzeugt wird, wobei jedes neue Werkstückbild ein neues Werkstück mit der gleichen Form wie das Originalwerkstück, aber entweder mit einer unterschiedlichen Länge oder einer unterschiedlichen Breite umfasst;
ein Trainingsmodul (802), das konfiguriert ist zum Durchführen eines Trainierens an einem neuronalen Netzwerkmodell, das eine Merkmalsextraktionsschicht (80) mit mehreren Merkmalsextraktionszweigen umfasst, um, basierend auf der Werkstückbildgruppe, die durch die Datenerweiterung erhalten wird, ein Werkstückerkennungsmodell zu erhalten;
ein Umwandlungsmodul (803), das konfiguriert ist zum Umwandeln des Werkstückerkennungsmodells in ein schlankes Werkstückerkennungsmodell, indem Mehrzweigsegmente einer trainierten Mehrzweig-Merkmalsextraktionsschicht (75) des Werkstückerkennungsmodells (70) durch Einzelzweigsegmente ersetzt werden, die eine identische Transformation wie die ersetzten Mehrzweigsegmente anwenden, um die trainierte Mehrzweig-Merkmalsextraktionsschicht (75) in eine schlanke Merkmalsextraktionsschicht (90) umzuwandeln; und
ein Erkennungsmodul (804), das konfiguriert ist zum Durchführen, basierend auf dem schlanken Werkstückerkennungsmodell, einer Erkennung an Werkstücken mit der gleichen Form wie das Originalwerkstück, aber entweder mit einer anderen Länge oder einer anderen Breite als das Originalwerkstück.

8. Elektronische Vorrichtung, die einen Prozessor (901) und einen Speicher (902) umfasst, wobei in dem Speicher (902) ein Anwendungsprogramm, das durch den Prozessor (901) ausführbar ist, gespeichert ist, um den Prozessor (901) zu veranlassen, ein Verfahren zum Erkennen eines Werkstücks nach einem der Ansprüche 1 bis 6 auszuführen.

9. Computerlesbares Medium, das computerlesbare Anweisungen umfasst, die darin gespeichert sind, wobei die computerlesbaren Anweisungen geeignet sind zum Ausführen eines Verfahrens zum Erkennen eines Werkstücks nach einem der Ansprüche 1 bis 6.

10. Computerprogrammprodukt, das ein Computerprogramm umfasst, wobei das Computerprogramm, sobald es von einem Prozessor ausgeführt wird, geeignet ist zum Ausführen eines Verfahrens zum Erkennen eines Werkstücks nach einem der Ansprüche 1 bis 6.

**Revendications**

1. Procédé de détection de pièces, comprenant :

la réalisation (101) d'une augmentation de données sur une image d'origine d'une pièce d'origine en générant un groupe d'images de pièce de nouvelles images de pièce, chaque nouvelle image de pièce comprenant une nouvelle pièce ayant la même forme que la pièce d'origine mais ayant soit une longueur différente, soit une largeur différente ;

la réalisation d'un apprentissage (102) sur un modèle de réseau neuronal (70) comprenant une couche d'extraction de caractéristiques (80) avec de multiples branches d'extraction de caractéristiques pour obtenir un modèle de détection de pièce basé sur le groupe d'images de pièce obtenu par l'augmentation de données ;

la conversion (103) du modèle de détection de pièce (74) en un modèle de détection de pièce léger en remplaçant des segments à branches multiples d'une couche d'extraction de caractéristiques à branches multiples entraînée (75) du modèle de détection de pièce (70) par des segments à branche unique appliquant une transformation identique aux segments à branches multiples remplacés pour convertir la couche d'extraction de caractéristiques à branches multiples entraînée (75) en une couche d'extraction de caractéristiques légère (90) ; et

la réalisation (104) d'une détection sur des pièces de même forme que la pièce d'origine, mais soit d'une longueur différente, soit d'une largeur différente de la pièce d'origine, sur la base du modèle de détection de pièce léger.

2. Procédé selon la revendication 1, dans lequel la génération d'une nouvelle image de pièce dans le groupe d'images de pièce sur la base de l'image d'origine comprend :

la division de la pièce d'origine dans l'image d'origine en une première région avec des caractéristiques invariantes et une deuxième région avec des caractéristiques variables ;

le changement de la longueur de la deuxième région pour générer une deuxième région avec une longueur modifiée, ou en variante le changement de la largeur de la deuxième région pour générer une deuxième région avec une largeur modifiée ;

la combinaison de la première région et de la deuxième région avec une longueur modifiée pour former la nouvelle image de pièce ; ou alternativement la combinaison de la première région et de la deuxième région avec une largeur modifiée pour former la nouvelle image de pièce.

3. Procédé selon la revendication 1, comprenant :

l'obtention d'un modèle de réseau neuronal multicouche (70) comprenant une couche d'extraction de caractéristiques (72) ;

le remplacement d'une couche d'extraction de caractéristiques (72) du modèle de réseau neuronal multicouche par une couche d'extraction de caractéristiques à branches multiples (80) ayant des branches d'extraction de caractéristiques multiples, les branches d'extraction de caractéristiques multiples comprenant au moins l'un parmi : un raccourci vers un additionneur ; un noyau convolutif 1x1 en parallèle avec une unité de regroupement ; un noyau convolutif 1x1 en parallèle avec une unité convolutive ;

la détermination du modèle de réseau neuronal multicouche remplacé (70) en tant que modèle de réseau neuronal.

4. Procédé selon la revendication 3, dans lequel la conversion (103) du modèle de détection de pièce en un modèle de détection de pièce léger comprend :

la conversion d'une première unité de normalisation par lot, d'un premier additionneur connecté à la première unité de normalisation par lot et d'un raccourci depuis l'entrée de modèle vers le premier additionneur dans le modèle de détection de pièce en une nouvelle première unité de normalisation par lot, sur la base d'un procédé de transformation identique qui résulte en une unité appliquant une transformation identique ;

la conversion d'une unité de regroupement, d'un deuxième additionneur connecté à l'unité de regroupement, d'un noyau convolutif 1x1 en parallèle de l'unité de regroupement et d'un raccourci depuis le premier additionneur vers le deuxième additionneur dans le modèle de détection de pièce en une nouvelle unité de regroupement, sur la base d'un procédé de transformation identique qui résulte en une unité appliquant une transformation identique ;

la conversion d'une unité d'abandon, d'un troisième additionneur connecté à l'unité d'abandon et d'un raccourci depuis l'entrée de l'unité d'abandon vers le troisième additionneur du modèle de détection de pièce en une nouvelle unité d'abandon, sur la base d'un procédé de transformation identique qui résulte en une unité appliquant une transformation identique ;

la conversion d'une deuxième unité de normalisation par lot, d'un quatrième additionneur connecté à la deuxième unité de normalisation par lot et d'un raccourci depuis l'entrée de la deuxième unité de normalisation par lot vers le quatrième additionneur dans le modèle de détection de pièce en une nouvelle deuxième unité de normalisation par lot, sur la base d'un procédé de transformation identique qui résulte en une unité appliquant une transformation identique ;

la conversion d'une unité convolutive, d'un cinquième additionneur, d'un noyau convolutif 1x1 en parallèle de l'unité convolutive et d'un raccourci depuis l'entrée de l'unité convolutive vers le cinquième additionneur dans le modèle de détection des pièces en une nouvelle unité convolutive, sur la base d'un procédé de transformation identique qui résulte en une unité appliquant une transformation identique ;

la connexion de la nouvelle première unité de normalisation par lot, de la nouvelle unité de regroupement, de la nouvelle unité d'abandon, de la nouvelle deuxième unité de normalisation par lot et de la nouvelle unité convolutive pour former une couche de détection de caractéristiques dans le modèle de détection de pièce léger.

5. Procédé selon la revendication 2, dans lequel la réalisation d'un apprentissage (102) sur un modèle de réseau neuronal comprend :
l'entraînement du modèle de réseau neuronal sur la base d'une image de pièce dans le groupe d'images de pièce comprenant une étiquette locale de la première région et une étiquette locale de la deuxième région, le procédé comprenant :

le déploiement du modèle de détection de pièce léger dans un dispositif de périphérie ;

l'entrée d'une image de pièce de référence comprenant des coordonnées de points de préhension prédéfinis dans le modèle de détection de pièce léger pour sortir les coordonnées centrales de la première région et les coordonnées centrales de la deuxième région dans l'image de pièce de référence ;

le stockage de manière associative des coordonnées centrales de la première région dans l'image de pièce de référence, des coordonnées centrales de la deuxième région dans l'image de pièce de référence et des coordonnées de points de préhension prédéfinis ;

l'entrée d'une image de la pièce à détecter dans le modèle de détection de pièce léger pour produire les coordonnées centrales de la première région dans l'image de la pièce à détecter et les coordonnées centrales de la deuxième région dans l'image de la pièce à détecter ;

la détermination des coordonnées de points de préhension dans l'image de la pièce à détecter sur la base des coordonnées centrales de la première région dans l'image de la pièce de référence, des coordonnées centrales de la deuxième région dans l'image de la pièce de référence, des coordonnées de points de préhension prédéfinis, des coordonnées centrales de la première région dans l'image de la pièce à détecter et des coordonnées centrales de la deuxième région dans l'image de la pièce à détecter.

6. Procédé selon la revendication 2, dans lequel la réalisation d'un apprentissage (102) sur un modèle de réseau neuronal comprend :
l'entraînement du modèle de réseau neuronal sur la base d'une image de pièce dans le groupe d'images de pièce comprenant une étiquette locale de la première région, une étiquette locale de la deuxième région et une étiquette globale de l'image de pièce, le procédé comprenant :

l'entrée d'une image comprenant plusieurs pièces avec des relations de chevauchement dans le modèle de détection de pièce léger, une relation de chevauchement se référant au cas où les contours de plusieurs pièces se chevauchent partiellement dans l'image ;

l'obtention de résultats de détection pour chacune des multiples pièces à partir du modèle de détection de pièce léger, chaque résultat de détection pour chaque pièce comprenant une première région et une deuxième région de la pièce correspondante.

7.  Appareil pour la détection de pièces, comprenant :

un module d'augmentation de données (801), configuré pour effectuer une augmentation de données sur une image d'origine d'une pièce d'origine en générant un groupe d'images de pièce de nouvelles images de pièce, chaque nouvelle image de pièce comprenant une nouvelle pièce ayant la même forme que la pièce d'origine mais ayant soit une longueur différente, soit une largeur différente ;

un module d'apprentissage (802), configuré pour effectuer un apprentissage sur un modèle de réseau neuronal comprenant une couche d'extraction de caractéristiques (80) avec de multiples branches d'extraction de caractéristiques pour obtenir un modèle de détection de pièce basé sur le groupe d'images de pièce obtenu par l'augmentation de données ;

un module de conversion (803), configuré pour convertir le modèle de détection de pièce en un modèle de détection de pièce léger en remplaçant des segments à branches multiples d'une couche d'extraction de caractéristiques à branches multiples entraînée (75) du modèle de détection de pièce (70) par des segments à branche unique appliquant une transformation identique aux segments à branches multiples remplacés pour convertir la couche d'extraction de caractéristiques à branches multiples entraînée (75) en une couche d'extraction de caractéristiques légère (90) ; et

un module de détection (804) conçu pour réaliser une détection sur des pièces de même forme que la pièce d'origine, mais soit d'une longueur différente, soit d'une largeur différente de la pièce d'origine, sur la base du modèle de détection de pièce léger.

8.  Dispositif électronique, comprenant un processeur (901) et une mémoire (902), dans lequel un programme d'application exécutable par le processeur (901) est stocké dans la mémoire (902) pour amener le processeur (901) à exécuter un procédé de détection de pièce selon l'une quelconque des revendications 1 à 6.

9.  Support de stockage lisible par ordinateur, sur lequel sont stockées des instructions lisibles par ordinateur, les instructions lisibles par ordinateur servant à exécuter un procédé de détection de pièce selon l'une quelconque des revendications 1 à 6.

10. Produit de programme informatique comprenant un programme informatique, lorsque le programme informatique est exécuté par un processeur pour exécuter un procédé de détection de pièce selon l'une quelconque des revendications 1 à 6.

Fig.1

Fig.2A

Fig.2B

Fig.3

| 1x | 2x | 1x | 2x | 1x |

31 32 33 ⊕ 35 36 ⊕

34

37

# Fig.4A

80

41 ⊕ 43 ⊕ 46 ⊕ 48 ⊕ 50 ⊕

44

51

42 45 47 49 52

# Fig.4B

90

| 60 | → | 61 | → | 62 | → | 63 | → | 64 |

1x

## Fig.4C

70

| 71 | → | 72 | → | 73 |

74

| 71 | → | 75 | → | 73 |

80

90

Fig.5

$$conv(1x1) = \begin{bmatrix} 0 & 0 & 0 \\ 0 & x & 0 \\ 0 & 0 & 0 \end{bmatrix}$$

$$shortcut = 1/9 \begin{bmatrix} 0 & 0 & 0 \\ 0 & 1 & 0 \\ 0 & 0 & 0 \end{bmatrix}$$

$$Pool = 1/9 \, x \begin{bmatrix} 1 & 1 & 1 \\ 1 & 1 & 1 \\ 1 & 1 & -8 \end{bmatrix}$$

$$Pool' = 1/9 \, x \begin{bmatrix} 1 & 1 & 1 \\ 1 & 1+x & 1 \\ 1 & 1 & -8 \end{bmatrix}$$

Fig.6

Fig.7

800

Fig.8

900

901     902

Fig.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CAO HU et al.** Efficient Grasp Detection Network With Gaussian-Based Grasp Representation for Robotic Manipulation. *IEEE/ASME Trans. Mechatronics*, June 2023, vol. 28 (3), 1384-1394
- **DING XIAOHAN et al.** RepVGG: Making VGG-style ConvNets Great Again. *2021 IEEE/ CVF CONFERENCE ON COMPUTER VISION AND PATTERN RECOGNITION (CVPR)*, 20 June 2021, 13728-13737
- **CHEN WEI et al.** FS-Net: Fast Shape-based Network for Category-Level 6D Object Pose Estimation with Decoupled Rotation Mechanism. *2021 IEEE/CVF CONFERENCE ON COMPUTER VISION AND PATTERN RECOGNITION (CVPR)*, 20 June 2021, 1581-1590